# FASCICULE DE BREVET EUROPEEN

(11) **EP 2 086 899 B1**
(45) Date de publication et mention de la délivrance du brevet: **08.12.2021**
(21) Numéro de dépôt: 07858579.1
(22) Date de dépôt: 15.10.2007
(51) Int. Cl.: C03C 17/23, C03C 17/25, C03C 17/34, C03C 17/42

(54) **PROCEDE DE FABRICATION D'UNE PLAQUE VITROCERAMIQUE**
HERSTELLUNGSVERFAHREN FÜR EINE GLAS-KERAMIK-PLATTE
MANUFACTURING PROCESS FOR A GLASS-CERAMIC PLATE

(30) Priorité: 16.10.2006 FR 0654285
(43) Date de publication de la demande: 12.08.2009
(73) Titulaire: Eurokera S.N.C., 02405 Château-Thierry Cedex (FR)
(72) Inventeur: VILATO, Pablo, 75014 Paris (FR); FAILLAT, Caroline, 02400 Belleau (FR); ROUILLON, Marie-Hélène, 02400 Chateau-thierry (FR)
(74) Mandataire: Saint-Gobain Recherche
(86) Numéro de dépôt international: PCT/FR2007/052152
(87) Numéro de publication internationale: WO 2008/047034

(56) Documents cités:
- EP-A- 1 505 354
- WO-A-2004/026786
- WO-A-2005/120154
- DE-A1-102004 053 706
- FR-A1- 2 654 096
- FR-A1- 2 857 958
- None

## Description

La présente invention concerne un procédé de fabrication d'une plaque vitrocéramique destinée, notamment, à couvrir ou recevoir des éléments de chauffage, en particulier destinée à servir de plaque de cuisson, et son procédé de fabrication.

Les ventes de plaques de cuisson en vitrocéramique sont en augmentation constante depuis plusieurs années. Ce succès s'explique notamment par l'aspect attractif de ces plaques et par leur facilité de nettoyage.

Rappelons qu'une vitrocéramique est à l'origine un verre, dit verre précurseur, dont la composition chimique spécifique permet de provoquer par des traitements thermiques adaptés, dits de céramisation, une cristallisation contrôlée. Cette structure spécifique en partie cristallisée confère à la vitrocéramique des propriétés uniques.

Il existe actuellement différents types de plaques en vitrocéramique, chaque variante étant le résultat d'études importantes et de nombreux essais, étant donné qu'il est très délicat de faire des modifications sur ces plaques et/ou sur leur procédé d'obtention sans risquer un effet défavorable sur les propriétés recherchées : pour pouvoir être utilisée comme plaque de cuisson, une plaque vitrocéramique doit généralement présenter une transmission dans les longueurs d'onde du domaine du visible à la fois suffisamment basse pour masquer au moins une partie des éléments de chauffage sous-jacents au repos et suffisamment élevée pour que, dans un but de sécurité, l'utilisateur puisse détecter visuellement les éléments de chauffage en état de marche ; elle doit également présenter une transmission élevée dans les longueurs d'onde du domaine de l'infrarouge.

Les principales plaques actuelles sont de couleur sombre, en particulier noires, mais il existe également des plaques d'aspect plus clair (en particulier blanches, présentant par exemple un flou d'au moins 50% comme décrit dans le brevet FR2766816), voire des plaques transparentes munies de revêtements opacifiants. Parmi les revêtements (fonctionnels et/ou décoratifs) connus pour les plaques vitrocéramiques, on trouve traditionnellement les émaux, à base de fritte de verre et de pigments, et certaines peintures résistant à haute température, à base par exemple de résines alkydes. Les émaux présentent notamment l'avantage de pouvoir être déposés sur le verre précurseur (ou verre-mère ou green-glass) avant céramisation et de pouvoir être cuits lors de la céramisation, et présentent également l'avantage de pouvoir résister à des hautes températures (permettant l'usage de différents moyens de chauffage pour la plaque) ; cependant ils présentent l'inconvénient de n'autoriser qu'un dépôt unique (pas de superposition d'émail possible) et à faible épaisseur sous peine notamment de s'écailler et d'endommager la plaque vitrocéramique. La peinture, quant à elle, peut s'appliquer en plusieurs couches (si besoin est) ; cependant, elle doit être appliquée après céramisation (et donc nécessite une cuisson supplémentaire) et reste limitée aux plaques pour foyers à induction (fonctionnant à plus basse température).

Plus récemment, des plaques vitrocéramiques ont également été proposées avec des revêtements à base de couches réfléchissantes déposées par pulvérisation cathodique magnétron, ou à base de mélanges vitrifiables incorporant des pigments à effet (paillettes d'oxyde d'aluminium ou de mica revêtues par des oxydes métalliques), permettant ainsi de réaliser des zones contrastées (en particulier des zones brillantes contrastant avec des zones plus mates) à caractère esthétique et/ou technique ; cependant, les revêtements à base de couches réfléchissantes déposées par magnétron sont plus onéreux, leur fabrication est plus complexe (ou délicate en cas de formation de motifs demandant des opérations de masquage compliquées) et est effectuée en reprise après céramisation, ces revêtements n'étant en outre généralement utilisés qu'avec des éléments de chauffage par induction et n'étant généralement pas adaptés à l'utilisation d'éléments de commande de type touches sensitives ; quant aux revêtements à base de mélange vitrifiable avec pigments à effet, outre un effet réfléchissant généralement atténué par la céramisation, ils présentent les mêmes inconvénients que les émaux déjà évoqués.

FR2654096 A1 décrit un article en vitro-céramique décoré à l'aide d'émail cuit, dans lequel une couche de SiO₂ de 20 à 200 nm est appliquée entre le décor et l'article. La couche de SiO₂ peut contenir jusqu'à 66,5 % en poids d'oxydes modifiant son indice de réfraction comme TiO₂, ZrO₂, et SnO₂. La couche de SiO₂ est obtenu selon le procédé sol-gel connu. De préférence, on produit une couche de gel de SiO₂ précondensée, par traitement thermique de courte durée; le décor est appliqué sur cette couche de gel puis l'article est soumis au traitement de céramisation, au cours duquel la couche de gel de SiO₂ est transformée en couche de SiO₂ et l'émail est cuit. Cette couche de SiO₂ permet de produire des décors au contour net, sans auréoles.

EP1505354 A1 divulgue un substrat fait d'un verre cristallisé ayant une translucidité et un coefficient de dilatation thermique linéaire moyen de -5×10⁻⁷/°C entre 30 et 500 °C. Le substrat a une première surface (surface de travail) d'une surface lisse ayant une rugosité de surface Rmax inférieure à 0,5 µm, et une seconde surface (surface non travaillante) d'une surface rugueuse ayant une rugosité de surface Rmax de 4 µm. Une couche de protection contre la lumière consistant en un film de protection contre la lumière et un film antioxydant est formée sur la seconde surface du substrat par pulvérisation.

Le but de la présente invention a été d'obtenir des plaques présentant un aspect fonctionnel et esthétique, en particulier et de préférence un aspect contrasté dû à la présence de zones réfléchissantes, de façon plus simple et/ou avantageuse que précédemment évoqué, en particulier avec un revêtement ne présentant pas les inconvénients précédents.

La nouvelle plaque obtenue par le procédé selon l'invention est une plaque vitrocéramique, destinée par exemple à couvrir ou recevoir au moins un élément de chauffage, en particulier destinée à servir de plaque de cuisson, ladite plaque étant au moins en partie revêtue d'au moins une couche nanométrique à base d'un matériau métallique d'indice de réfraction supérieur à celui de la vitrocéramique.

Par plaque vitrocéramique, on entend par la suite non seulement les plaques réalisées en vitrocéramique proprement dite mais également les plaques en tout autre matériau analogue résistant à haute température et présentant un coefficient de dilatation nul ou quasi-nul (par exemple inférieur à 15.10⁻⁷ K⁻¹). De préférence cependant, il s'agit d'une plaque en vitrocéramique proprement dite.

Par couche nanométrique, on entend une couche dont l'épaisseur n'excède pas 100 nm, de préférence 50 nm (à titre de comparaison l'épaisseur d'une couche d'émail est généralement de 2.5 à 5 µm après cuisson et l'épaisseur d'une couche magnétron est généralement supérieure à 100 nm. Avantageusement, les particules du matériau métallique formant la couche présentent initialement (avant agglomération) une taille nanométrique, en particulier présentent un diamètre moyen inférieur à 100 nm (avec au moins 90% desdites particules présentant généralement un diamètre inférieur à 100 nm), et de préférence inférieur à 50 nm.

Par couche à base d'un matériau métallique, on entend que la couche est formée en majorité (au moins 95% et généralement de l'ordre de 100%, en poids) dudit matériau, ladite couche étant généralement et avantageusement constituée dudit matériau (100% en poids). Par matériau métallique, on entend dans la couche un ou des composés choisis parmi des composés inorganiques d'un élément métal (titane, étain, zirconium, aluminium, fer...) tels que oxydes métalliques, sulfures métalliques, nitrures métalliques (ou oxy-nitrures), de préférence choisis parmi les oxydes métalliques. L'indice de réfraction de la vitrocéramique étant de l'ordre de 1.54, la couche nanométrique définie selon l'invention est préférentiellement formée (ou à base de) d'oxyde d'aluminium Al₂O₃ (indice de réfraction n de l'ordre de 1.77) et/ou de dioxyde d'étain SnO₂ (indice de réfraction n de l'ordre de 1.85) et/ou de dioxyde de zirconium ZrO₂ (indice de réfraction n de l'ordre de 2) et/ou de dioxyde de titane TiO₂ (indice de réfraction n de l'ordre de 2 à 2.2), et/ou d'oxyde de fer Fe₂O₃ (indice de réfraction n de l'ordre de 2.9 à 3.2), et, de façon particulièrement préférée, est formée (ou à base) de dioxyde de titane ou d'oxyde de fer Fe₂O₃.

La couche précédemment définie couvre généralement au moins une partie d'une face de la plaque, comme détaillé ultérieurement, et peut couvrir avantageusement la totalité de ladite face.

La présente divulgation concerne également la composition appliquée sur la plaque pour obtenir la couche précédemment définie, cette composition comprenant au moins le matériau métallique précité et/ou un ou des précurseurs dudit matériau.

De préférence, la composition appliquée comprend au moins un matériau organique permettant l'accrochage des particules du matériau métallique précité sur la plaque et/ou est appliquée conjointement (dépôt successifs) avec une autre composition comprenant ledit matériau organique. Le cas échéant, la composition appliquée peut également comprendre un médium organique, permettant notamment l'ajustement de sa viscosité pour le dépôt sur la plaque.

Le matériau organique permettant l'accrochage des particules de matériau métallique se présente généralement sous forme polymérique, et peut intégrer ledit matériau métallique (cas par exemple de composés organométalliques, constituant alors des précurseurs dudit matériau métallique) ou peut simplement former un liant desdites particules, ce matériau organique étant dans tous les cas éliminé (en particulier brûlé) ultérieurement lors de la cuisson pour donner la couche définie selon l'invention (le médium présent le cas échéant dans la composition étant généralement préalablement éliminé par séchage comme détaillé ultérieurement).

Comme évoqué précédemment, les particules de matériau métallique peuvent provenir de précurseur(s) (silicates, sulfates, phosphates, borates, sélénates, nitrates, carbonates, titanates, etc organométalliques) libérant les particules pendant la cuisson de la couche) et/ou peuvent avoir été préalablement formées selon différents procédés connus (avant leur ajout à la composition appliquée sur la plaque). Dans ce dernier cas, il s'agit de préférence de particules obtenues par pyrogénation (par exemple en passant dans une flamme, en présence d'oxygène, un composé organométallique afin d'enlever la partie organique du composé), ce procédés permettant notamment d'obtenir des particules de taille nanométrique.

La composition déposée sur la plaque peut également comprendre un ou des promoteurs d'adhésion (tels que des silanes), un ou des agents pour ajuster la viscosité et permettre son dépôt sur la plaque, etc. Cette composition se présente sous forme d'une solution (ou un sol-gel), stable, de consistance liquide à pâteuse (en particulier se présente sous forme d'une pâte sérigraphiable en vue du dépôt par sérigraphie).

La couche obtenue par le procédé selon l'invention peut éventuellement comprendre, outre le matériau métallique, un ou des composés formés le cas échéant par les précurseurs dudit matériau (par exemple des traces de carbone), etc.

La présente divulgation concerne également un procédé de fabrication de la plaque selon l'invention, dans lequel on applique, de préférence par sérigraphie, la composition précédente sur la plaque de verre précurseur avant céramisation, ladite composition étant cuite pendant le cycle de céramisation.

Pour mémoire, la fabrication des plaques vitrocéramiques s'opère généralement comme suit : dans un four de fusion, on fond le verre de composition choisie pour former la vitrocéramique, puis on lamine le verre fondu en un ruban ou feuille standard en faisant passer le verre fondu entre des rouleaux de laminage et on découpe le ruban de verre aux dimensions souhaitées. Les plaques ainsi découpées sont ensuite céramisées de manière connue en soi, la céramisation consistant à cuire les plaques suivant le profil thermique choisi pour transformer le verre en le matériau polycristallin appelé « vitrocéramique » dont le coefficient de dilatation est nul ou quasi-nul et qui résiste à un choc thermique pouvant aller jusqu'à 700°C. La céramisation comprend généralement une étape d'élévation progressive de la température jusqu'au domaine de nucléation, généralement situé au voisinage du domaine de transformation du verre, une étape de traversée en plusieurs minutes de l'intervalle de nucléation, une nouvelle élévation progressive de la température jusqu'à la température du palier de céramisation, le maintien de la température du palier de céramisation pendant plusieurs minutes puis un refroidissement rapide jusqu'à la température ambiante. Le cas échéant, le procédé comprend également une opération de découpe (généralement avant céramisation), par exemple par jet d'eau, traçage mécanique à la molette, etc. suivie par une opération de façonnage (meulage, biseautage,...).

De préférence, la composition précédemment décrite est déposée sur la plaque, sous forme de pâte, par sérigraphie, l'épaisseur du film humide étant par exemple de l'ordre de 5 à 20 µm. Après dépôt de la composition, la plaque de verre précurseur revêtue est séchée (par exemple par infra-rouge ou en étuve), généralement à des températures de l'ordre de 100-150°C, de façon à évaporer le solvant (médium), fixer le revêtement et permettre la manipulation de la plaque, résultant en un revêtement séché présentant alors une épaisseur généralement de l'ordre de 1 à 5 µm, puis subit un cycle de céramisation traditionnel à haute température (comme évoqué précédemment), la cuisson de la couche accompagnant la transformation du substrat, la couche nanométrique résultante présentant généralement une épaisseur de l'ordre de 10 à 100 nm, notamment de l'ordre de 20 à 50 nm.

La couche nanométrique obtenue (par exemple une couche nanométrique de dioxyde de titane telle que préférée selon l'invention) présente un aspect réfléchissant supérieur à celui de la vitrocéramique nue (par exemple une augmentation de réflexion dans le visible de l'ordre de 5 à 50 points par rapport à la vitrocéramique nue). Contrairement à ce que l'on pouvait redouter, les interactions éventuelles entre la vitrocéramique et la couche nanométrique définie selon l'invention n'entraînent pas de perturbation ou de modification de la surface de la vitrocéramique (fragilisation, tensions, changement d'état cristallin, modification du cycle thermique ou de l'endurance thermique, etc). Du point de vue du procédé, la composition déposée ne diffère pas d'un émail classique et est totalement compatible avec les lignes de production existantes, en particulier elle peut être appliquée par sérigraphie en utilisant les toiles et presses habituelles et ne nécessite pas non plus de traitement thermique supplémentaire ; pour autant, elle ne présente pas les défauts d'un émail (pas de fragilisation de la face décorée, pas de soucis de contrôle d'épaisseur, pas de risque d'arrachement, etc.). Par rapport aux couches minces déposées par magnétron, elle est plus économique, et peut être utilisée avec des touches sensitives, étant avantageusement isolante électriquement. Elle est également compatible avec tous types de chauffage (en particulier, elle supporte les températures élevées - jusqu'à 700°C- des éléments chauffants radiants, convient aux champs magnétiques des bobines d'induction, etc), contrairement aux couches par magnétron et aux peintures réservées à certains types de chauffage. Elle peut également être déposée dans toute zone de la plaque (y compris zones de chauffe) contrairement notamment aux peintures.

La couche obtenue présente une bonne résistance au vieillissement et aux chocs thermiques, de bonnes propriétés de résistance mécanique (améliorées par rapport aux émaux), une bonne résistance à l'abrasion et aux taches, etc. conformes aux propriétés recherchées pour les plaques vitrocéramiques. Elle présente également la même résistance aux attaques chimiques ou aux salissures que les plaques traditionnelles. Les plaques selon l'invention satisfont également aux impératifs en termes de propriétés optiques, de sécurité, etc. Le cas échéant, on observe la présence de phase(s) cristalline(s), en particulier de type anatase lorsque la couche nanométrique est à base de TiO₂ (l'anatase pouvant le cas échéant être l'unique phase cristalline de ladite couche), dans la couche obtenue.

Dans un mode de réalisation particulièrement préféré, la plaque est à base d'une vitrocéramique opaque (telle que les plaques commercialisées sous le nom Kérablack par la société Eurokéra) revêtue par la couche définie selon l'invention. On observe dans ce cas que la plaque présente aux endroits revêtus un aspect très métallisé, miroir, beaucoup plus brillant que dans le cas d'émaux classiques ou que dans le cas d'émaux à effets interférentiels.

Dans le cas d'une plaque à base d'une vitrocéramique transparente (telle que les plaques commercialisées sous le nom Kerabiscuit ou KeraVanilla par la société Eurokéra) ou translucide (telle que les plaques commercialisées sous le nom Kerawhite par la société Eurokéra) revêtue par la couche définie selon l'invention, la plaque constitue une alternative avantageuse (pour les raisons déjà évoquées) aux plaques transparentes ou translucides revêtues de couches par magnétron, l'effet obtenu, en particulier en combinaison avec une passe de peinture opacifiante (notamment noire) étant métallisé ou brillant et le cas échéant nacré. Dans le cas d'une plaque à base d'une vitrocéramique transparente ou translucide, la couche définie selon l'invention peut être notamment destinée à masquer, au moins en partie, les éléments sous-jacents au repos (tels que éléments de chauffage et afficheurs éventuels), tout en permettant la détection des éléments de chauffage et afficheurs éventuels lorsqu'ils sont en service.

La couche définie peut constituer le seul revêtement de la plaque ou peut être combinée avec d'autres couches comme précédemment évoqué. En particulier, elle peut être utilisée avec au moins une couche de peinture opacifiante (mode préféré pour les vitrocéramiques transparentes et mode de réalisation permettant un effet encore plus brillant dans le cas d'une vitrocéramique translucide ou noire), cette couche de peinture étant de préférence en face inférieure de la plaque (en position d'utilisation).

La ou les couches de peinture combinées le cas échéant à la couche nanométrique sont avantageusement choisies de façon à résister à de hautes températures et à présenter une stabilité au niveau de leur couleur et de leur cohésion avec la plaque, et de façon à ne pas affecter les propriétés mécaniques de la plaque. Elles présentent avantageusement une température de dégradation supérieure à 350°C, sont généralement à base de résine(s) (telle(s) qu'une résine silicone, en particulier modifiée par l'incorporation d'au moins une résine alkyde, résine polyimide, polyamide, polyfluorée et/ou polysiloxane, comme les résines Dow Corning^{®} 804, 805, 806, 808, 840, 249, 409 HS et 418 HS, Rhodorsil^{®} 6405 et 6406 de Rhodia, Triplus^{®} de General Electric Silicone et SILRES^{®} 604 de Wacker Chemie GmbH, etc), et sont le cas échéant chargées (par exemple en pigment(s) ou colorant(s)), et éventuellement diluées pour ajuster leur viscosité, le diluant étant le cas échéant éliminé lors de leur cuisson ultérieure. L'épaisseur de chaque couche de peinture peut être comprise entre 1 et 100 microns (notamment entre 5 et 50 microns) et son application peut s'effectuer par toute technique adaptée, telle que dépôt à la brosse, à la raclette, par pulvérisation, dépôt électrostatique, trempage, dépôt au rideau, dépôt par sérigraphie, etc. De préférence selon l'invention, il se fait par sérigraphie, suivie le cas échéant par un séchage.

La couche peut également être combinée avec au moins une couche d'émail. De façon surprenante, l'émail superposé à la couche (qu'il s'agisse de l'émail déposé sur la couche ou de la couche déposée sur l'émail) ne s'écaille pas, contrairement à la superposition de deux couches d'émail qui n'est pas réalisable. L'émail peut être choisi parmi tous les émaux traditionnellement utilisés pour le revêtement des vitrocéramiques et comprend généralement au moins une fritte de verre et des pigments, ainsi qu'un médium permettant son application, et est généralement et préférentiellement selon l'invention appliqué par sérigraphie.

Ainsi qu'il apparaît précédemment, de façon particulièrement avantageuse selon la présente divulgation, a couche nanométrique peut ainsi servir de sous couche à une autre couche, telle qu'une couche d'émail ou de peinture, permettant notamment selon les cas d'augmenter les épaisseurs, de juxtaposer deux types de décors, de procurer un effet brillant soutenu, etc.

La couche obtenue par le procédé selon l'invention peut être déposée en face supérieure ou inférieure de la plaque. La ou les autres couches utilisées le cas échéant en combinaison avec la couche nanométrique peuvent être appliquée sur la même face (sur ou sous la couche nanométrique) ou sur la face opposée de la plaque. Lorsque la couche nanométrique sert de sous couche, elle peut par exemple être appliquée comme première couche dans une ou des zones où sont éventuellement prévues ou pratiquées une ou des épargnes ou réserves (laissées par exemple par la technique de dépôt par sérigraphie), et lesdites épargnes et/ou la première couche peuvent être revêtues par au moins une seconde couche pour former des zones contrastées ou des effets plus appuyés.

A noter que selon le nombre de couches supplémentaires par rapport à la couche nanométrique selon l'invention, leur dépôt peut se faire successivement avant et/ou après (en ligne ou en reprise) céramisation, chaque dépôt étant généralement suivi par un traitement thermique. A noter également que le dépôt de la couche selon l'invention est, comme défini selon l'invention, préférentiellement effectué avant céramisation mais peut au besoin être effectué après et/ou par une autre méthode que la sérigraphie.

Les plaques autorisent ainsi la réalisation de nouveaux décors et d'effets esthétiques (effets contrastés, nacrés, etc), en combinaison le cas échéant avec les autres revêtements (traditionnels) des vitrocéramiques, les décors pouvant être fins ou non, réguliers (maillage, etc) ou non, discontinus ou continus, etc. et étant réalisés de façon simple et n'ayant pas d'effets néfastes sur les propriétés habituellement recherchées.

La plaque peut le cas échéant être munie de (ou associée avec des) élément(s) fonctionnel(s) ou de décor supplémentaire(s) (cadre, connecteur(s), câble(s), élément(s) de commande, afficheur(s), par exemple à diodes électroluminescentes dits « à 7 segments », bandeau de commande électronique à touches sensitives et affichage digital, etc.). Le cas échéant, la plaque peut être montée sur le support isolant, à l'intérieur duquel sont disposés le ou les éléments de chauffage sans complexe intermédiaire visant à masquer l'intérieur de l'appareil à la vue de l'utilisateur.

La divulgation concerne aussi les appareils (ou dispositifs) de cuisson et/ou de maintien à haute température comportant au moins une plaque selon l'invention (par exemple cuisinières, et plaques de cuisson encastrables). La divulgation englobe aussi bien des appareils de cuisson comportant une seule plaque que des appareils comportant plusieurs plaques, chacune de ces plaques étant à feu unique ou à feux multiples. Par le terme « feu », on entend un emplacement de cuisson. L'invention concerne également des appareils de cuisson mixtes dont la ou les plaques de cuisson comportent plusieurs types de feux. En outre, l'invention n'est pas limitée à la fabrication de plaques de cuisson pour cuisinières ou tables de cuisson. Les plaques fabriquées conformément à l'invention peuvent également être d'autres plaques (inserts de cheminées, pare-feu, etc) devant présenter une grande insensibilité aux variations de température.

L'exemple suivant illustre la présente invention sans toutefois en limiter la portée.

On fabrique une plaque vitrocéramique opaque noire dont les deux faces sont lisses, à partir d'un verre ayant par exemple la composition décrite dans la demande de brevet FR2657079.

Ce verre est fondu aux alentours de 1600-1750°C, en une quantité telle qu'un ruban de verre puisse être laminé, ruban dans lequel des plaques de verre, par exemple de dimensions finales 56,5 cm x 56,5 cm x 0,4 cm, sont découpées.

Les plaques sont revêtues par sérigraphie sur leur face supérieure avec une composition, sous forme d'un gel stable sérigraphiable, à base d'un composé organométallique du titane (tel que du tétraisopropanolate de titane) précurseur du dioxyde de titane, d'un liant organique et d'un médium de dilution à base d'éther et d'acétate de glycol, à l'aide de toiles habituelles en polyester, à des emplacements signalant par exemple les foyers de chauffage, les afficheurs et des zones décoratives.

Les plaques sont ensuite séchées aux alentours de 100-150°C, l'épaisseur de la couche après séchage étant par exemple de 2 µm, puis sont céramisées sur des plateaux céramiques selon un cycle tel que décrit dans la demande de brevet FR2657079.

On obtient des plaques vitrocéramiques à l'aspect esthétique plaisant et original, cette plaque présentant une zone de fond noire mate opaque cachant les éléments de structure sous-jacents du dispositif de cuisson, et comportant des motifs d'aspect brillant (par exemple d'aspect miroir plutôt argenté) constitués par la couche nanométrique de dioxyde de titane obtenue (contenant éventuellement des impuretés apportées par le traitement thermique) cachant également les éléments sous-jacents au repos tout en permettant de voir quand ils sont en état de marche.

Les plaques obtenue par le procédé selon l'invention peuvent notamment être utilisées avec avantages pour réaliser une nouvelle gamme de plaques de cuisson pour cuisinières ou tables de cuisson.

## Revendications

1. Procédé de fabrication d'une plaque vitrocéramique destinée à couvrir ou recevoir au moins un élément de chauffage, dans lequel on applique une composition sous forme d'une solution de consistance liquide à pâteuse sur le verre précurseur avant céramisation, ladite composition comprenant au moins un matériau métallique d'indice de réfraction supérieur à celui de la vitrocéramique et/ou un précurseur dudit matériau, ladite composition étant cuite pendant un cycle de céramisation pour obtenir une couche nanométrique dont l'épaisseur est inférieure à 100 nm et qui est formée d'au moins 95% en poids d'un matériau métallique, ledit matériau métallique étant un ou des composés choisis parmi l'oxyde d'aluminium Al₂O₃, le dioxyde d'étain SnO₂, le dioxyde de zirconium ZrO₂, le dioxyde de titane TiO₂, l'oxyde de fer Fe₂O₃, les sulfures métalliques, les nitrures métalliques.

2. Procédé selon la revendication 1, **caractérisé en ce que** la composition est appliquée sur le verre précurseur par sérigraphie.

3. Procédé selon l'une quelconque des revendications précédentes, **caractérisé en ce que** la composition comprend en outre un matériau organique permettant l'accrochage des particules du matériau métallique sur la plaque.

4. Procédé selon l'une quelconque des revendications précédentes, **caractérisé en ce que** la couche nanométrique sert de sous couche à une autre couche.

5. Procédé selon l'une des revendications précédentes, **caractérisé en ce que** la couche nanométrique est combinée à au moins une couche de peinture.

6. Procédé selon l'une des revendications précédentes, **caractérisé en ce que** la couche nanométrique est combinée à au moins une couche d'émail.

## Patentansprüche

1. Herstellungsverfahren für eine Glaskeramikplatte, die dazu bestimmt ist, mindestens ein Erwärmungselement zu bedecken oder aufzunehmen, bei dem eine Zusammensetzung in Form einer Lösung mit flüssiger bis pastöser Konsistenz vor der Keramisierung auf das Vorläuferglas aufgetragen wird, wobei die Zusammensetzung mindestens ein metallisches Material mit einem größeren Brechungsindex als dem der Glaskeramik und/oder einen Vorläufer des Materials umfasst, wobei die Zusammensetzung während eines Keramisierungszyklus gebrannt wird, um eine nanometrische Schicht zu erhalten, deren Dicke weniger als 100 nm beträgt und die zu mindestens 95 Gew.-% aus einem metallischen Material gebildet ist, wobei es sich bei dem metallischen Material um eine oder mehrere Verbindungen handelt, die aus Aluminiumoxid Al₂O₃, Zinndioxid SnO₂, Zirkoniumdioxid ZrO₂,Titandioxid TiO₂, Eisenoxid Fe₂O₃, Metallsulfiden, Metallnitriden ausgewählt sind.

2. Verfahren nach Anspruch 1, **dadurch gekennzeichnet, dass** die Zusammensetzung durch Siebdruck auf das Vorläuferglas aufgebracht wird.

3. Verfahren nach einem der vorstehenden Ansprüche, **dadurch gekennzeichnet, dass** die Zusammensetzung außerdem ein organisches Material umfasst, das die Befestigung von Partikeln des metallischen Materials an der Platte ermöglicht.

4. Verfahren nach einem der vorstehenden Ansprüche, **dadurch gekennzeichnet, dass** die nanometrische Schicht als Unterschicht für eine andere Schicht dient.

5. Verfahren nach einem der vorstehenden Ansprüche, **dadurch gekennzeichnet, dass** die nanometrische Schicht mit mindestens einer Lackschicht kombiniert wird.

6. Verfahren nach einem der vorstehenden Ansprüche, **dadurch gekennzeichnet, dass** die nanometrische Schicht mit mindestens einer Emailleschicht kombiniert wird.

## Claims

1. A process for manufacturing a glass-ceramic plate intended to cover or accommodate at least one heating element, in which a composition in the form of a solution of a liquid-to-pasty consistencyis applied on the precursor glass before ceramization, said composition comprising at least one metallic material with a refractive index greater than that of the glass-ceramic and/or a precursor of said material, said composition being baked during a ceramization cycle for obtaining a nanoscale layer having a thickness of less than 100 nm and being formed from at least 95% by weight of a metallic material, said metallic material being one or more compounds selected from aluminum oxide Al₂O₃, tin oxide SnO₂, zirconium oxide ZrO₂, titanium oxide TiO₂, iron oxide Fe₂O₃, metallic sulfides, metallic nitrides.

2. The process as claimed in claim 1, **characterized in that** the composition is applied on the precursor glass by screen printing.

3. The Process as claimed in any one of the preceeding claims, **characterized in that** the composition further comprised an organic material for bonding the particles of the metallic material to the plate.

4. The process as claims in any one of the preceeding claims, **characterized in that** the nanoscale layer serves as underlayer for another layer.

5. The process as claims in any one of the preceeding claims, **characterized in that** the nanoscale layer is combined with at least one paint layer.

6. The process as claims in any one of the preceeding claims, **characterized in that** the nanoscale layer is combined with at least one enamel layer.
